# EUROPÄISCHE PATENTSCHRIFT

(11) **EP 0 422 052 B1**
(45) Veröffentlichungstag und Bekanntmachung des Hinweises auf die Patenterteilung: **21.04.1993**
(21) Anmeldenummer: 89907136.9
(22) Anmeldetag: 19.06.1989
(51) Int. Cl.: C01B 33/20

(54) **VERFAHREN ZUM ENTSALZEN QUELLFÄHIGER SCHICHTSILIKATE**
PROCESS FOR REMOVING SALTS FROM EXPANDABLE LAMINAED SILICA
PROCEDE POUR DESSALER DES SILICATES STRATIFIES GONFLANTS

(30) Priorität: 25.06.1988 DE 3821516
(43) Veröffentlichungstag der Anmeldung: 17.04.1991
(73) Patentinhaber: Henkel Kommanditgesellschaft auf Aktien, 40191 Düsseldorf (DE)
(72) Erfinder: WÜST, Willi, Dr., D-4030 Ratingen (DE); JUST, Günther, D-4010 Hilden (DE)
(86) Internationale Anmeldenummer: EP8900687
(87) Internationale Veröffentlichungsnummer: WO8912602

(56) Entgegenhaltungen:
- Chemical Abstracts, Band 87, Nr. 12, 19. September 1977, (Columbus Ohio, US), M.K. Gal'perina et al.: "Improvement in process for removing water-soluble salts from slips during filter pressing",siehe Seite 291, Zusammenfassung 89292p, & Steklo Keram. 1977, (6), 18-20
- Kirk-Othmer: "Encyclopedia of Chemical Technology", 3. Ausgabe, Band 10, 1980, John Wiley & Sons, (New York, Us), siehe Seiten 309-311

## Beschreibung

Die Erfindung betrifft ein Verfahren zum Entsalzen quellfähiger Schichtsilikate unter Verwendung von Filterpressen. In solchen Verfahren sollen die Schichtsilikate elektrolytfrei aus der Ausgangssuspension abgetrennt werden. Ein Problem bildet in diesen Verfahren die Quellfähigkeit der Sichtsilikate, durch die das Entsalzen sehr langwierig und aufwendig wird. Die Quellfähigkeit führt in der Regel auch zu einem relativ niedrigen Entsalzungsgrad.

Ein Verfahren der eingangs genannten Art ist aus Chemical Abstract, Band 87, Nr. 12, 1977, 291, 89292 p bekannt. In diesem Verfahren wird Ton in Gegenwart eines Filterhilfsmittels in einer Filterpresse entsalzt. Aus dem Stand der Technik ist es ferner bekannt, Membranfilterpressen zu verwenden, um feinteilige Feststoffe in Kombination mit einem Waschvorgang abzufiltern (Kirk-Othmer: "Encyclopedia of Chemical Technology", 3. Ausgabe, Band 10, 1980, 309 ff.).

Der Erfindung liegt die Aufgabe zugrunde, ein Verfahren zum Entsalzen quellfähiger Schichtsilikate zu schaffen, mit dem die Silikate nahezu elektrolytfrei mit vertretbarem Zeitaufwand aus einer wäßrigen, Elektrolyte enthaltenden Suspension isoliert werden können.

Diese Aufgabe wird erfindungsgemäß dadurch gelöst, daß eine Membranfilterpresse mit einer wäßrigen, Schichtsilikate enthaltenden Suspension befüllt wird, dann die Silikate in der Presse gewaschen werden und erst danach abgepreßt wird.

Besonders wirksam werden die Schichtsilikate entsalzt, wenn zum Waschen das Waschwasser durch den Trübekanal der Presse und zwischen den Kuchenhälften entlang geleitet wird.

Um den beim Befüllen der Presse sich aufbauenden Filterkuchen für das nachfolgende Waschen durchlässig zu halten, ist es vorteilhaft, wenn die Suspension mit höchstens 5 bar, vorzugsweise 1 bis 3 bar Förderdruck in die Presse gefüllt wird.

Beim Waschen der Schichtsilikate muß darauf geachtet werden, daß das Befüllen der Presse mit den Schichtsilikaten beendet wird, bevor die Filterkuchenhälften zusammenwachsen.

Beim Waschen wird der Waschwasserdruck allmählich bis auf 3,5 bar gesteigert. Für das abschließende Abpressen mittels Membranen wird ein Preßdruck von maximal 30 bar, vorzugsweise von 10 bis 20 bar, eingestellt.

Ein besonders gutes Ergebnis des erfindungsgemäßen Verfahrens erhält man, wenn der Gehalt an Schichtsilikat in der Ausgangssuspension auf 0,5 bis 3 %, vorzugsweise auf 1 bis 2 %, eingestellt wird.

Dieses Einstellen des Schichtsilikatgehaltes kann z. B. durch Verdünnen mit Wasser geschehen.

Besonders wirkungsvoll ist das Verfahren bei stark quellenden Schichtsilikaten, z. B. bei synthetisch hergestellter. Hectoriten. Insbesondere bei Schichtsilikaten mit mittleren Teilchendurchmessern kleiner als 10 µm ist das Verfahren sehr vorteilhaft.

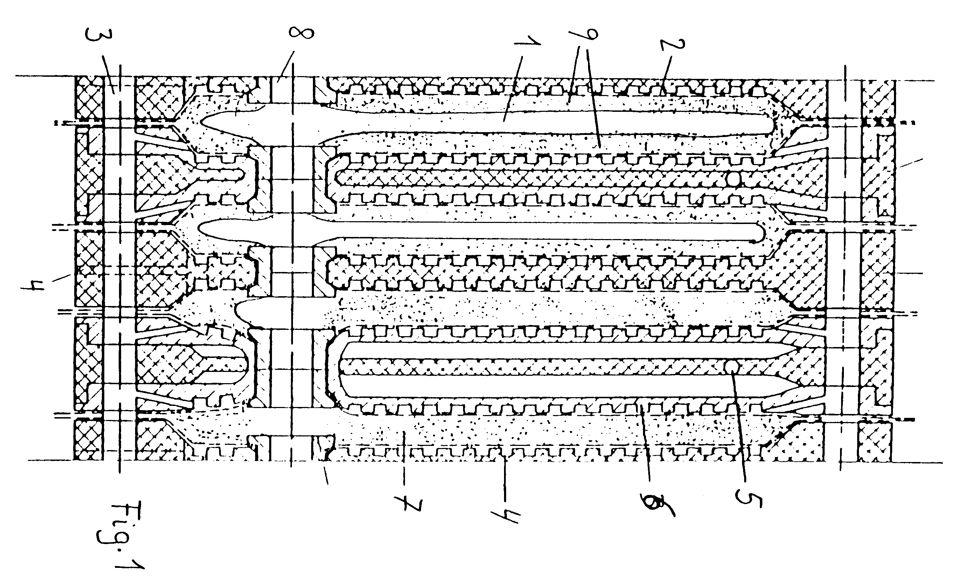

Im folgenden wird die Erfindung anhand von Ausführungsbeispielen unter Bezugnahme auf die Zeichnung näher beschrieben.

Die einzige Figur zeigt den Querschnitt einer Membranfilterpresse, insbesondere den Filterplattensatz mit den Membranplatten. Die Suspension wird über den Trübekanal (8) in den Füllraum (1) der Presse zwischen den Filtertüchern (2) eingefüllt. Nachdem das Filtrat durch die Filtratkanäle (3) und (4) abgelaufen ist, wird auf gleiche Weise Waschwasser aufgegeben. Danach wird über den Druckluftanschluß (5) Preßluft auf die Membran (6) gegeben, die sich daraufhin ausdehnt und den Filterkuchen (7) zusammenpreßt.

### 1. Ausführungsbeispiel:

Eine sehr feinteilige Hectorit-Suspension mit einem hohen Anteil von Teilchen unter 1 µm wird nach dem erfindungsgemäßen Verfahren behandelt. Die Suspension enthält nach der Synthese 4,6 % Aktivsubstanz und 4,2 % Natriumsulfat. Erfindungsgemäß wurde eine mit dichtgewebtem Polypropylen-Tuch bespannte Membranfilterpresse mit 50 mm Kammertiefe befüllt. Die Befüllung erfolgte mit niedrigem Förderdruck, nämlich maximal 2,0 bar, um den sich im Raum (1) aufbauenden Filterkuchen für das nachfolgende Waschen durchlässig zu halten. Das Befüllen wurde beendet, bevor die an den Tüchern (2) haftenden Filterkuchenhälften (7) zusammengewachsen waren. Das Befüllen dauerte 13 min.

Anschließend wurde der Filterkuchen (7) mit Wasser einer Temperatur von 50 °C gewaschen. Das Wasser wurde durch den Trübekanal (8) und dann entlang den Filterkuchenhälften (9) geleitet. Gleichzeitig wurde ein allmählich steigender wasserdruck bis 3,5 bar angelegt. Dieses waschen mit allmählich steigendem Druck wurde 190 min. lang durchgeführt.

Danach wurde das Waschen beendet und der Preßdruck auf 12 bar eingestellt. Dieses Abpressen dauerte 30 min. lang. Daraufhin wurde der Filterkuchen ausgetragen.

Die Kuchenstärke lag bei 15 bis 35 mm. Der Filterkuchen hatte einen Feststoffgehalt von 12,9 %. Der Restsalzgehalt lag bei 0,35 %. Das entspricht einem Entsalzungsgrad von 94,3 %. Die spezifische Filterleistung betrug 0,36 kg/m²h.

### 2. Ausfürungsbeispiel:

Die oben beschriebene Hectoritsuspension wurde hier ebenfalls verwendet. Ein Teil der Suspension wurde mit 2 Teilen Wasser verdünnt. Die Membranfilterpresse hatte eine Kammertiefe von 40 mm. Die Filtration wurde bei einer Temperatur von 55 °C durchgeführt. Das Füllen dauerte 21 min., das Waschen 155 min. und das Abpressen 13 min.

Ansonsten wurde dasselbe Verfahren wie in Beispiel 1 angewandt.

Die Kuchenstärke betrug in diesem Fall 10 bis 20 mm. Der Feststoffgehalt lag bei 15,5 %. Es wurde ein Restsalzgehalt von 0,15 %, was einem Entsalzungsgrad von 98,0 % entspricht, erreicht. Die spezifische Filterleistung betrug hier 0, 28 kg/m²h.

### Bezugszeichenliste:

- 1: Füllraum
- 2: Filtertuch
- 3, 4: Filtratkanäle
- 5: Druckluftanschluß
- 6: Membran
- 7: Filterkuchen
- 8: Trübekanal
- 9: Filterkuchenhälfte

## Patentansprüche

1. Verfahren zum Entsalzen quellfähiger Schichtsilikate unter Verwendung von Filterpressen,
dadurch gekennzeichnet,
daß eine Membranfilterpresse mit einer wäßrigen, Schichtsilikate enthaltenden Suspension befüllt wird, dann die Silikate in der Presse gewaschen werden und erst danach abgepreßt wird.

2. Verfahren nach Anspruch 1,
dadurch gekennzeichnet,
daß zum Waschen das Waschwasser durch den Trübekanal (8) der Presse und zwischen den Kuchenhälften entlang geleitet wird.

3. Verfahren nach Anspruch 1 oder 2,
dadurch gekennzeichnet,
daß die Suspension mit höchstens 5 bar, vorzugsweise 1 bis 3 bar Förderdruck in die Presse gefüllt wird.

4. Verfahren nach einem der Ansprüche 1 bis 3,
dadurch gekennzeichnet,
daß das Befüllen der Presse mit den Schichtsilikaten beendet wird, bevor die Filterkuchenhälften zusammenwachsen.

5. Verfahren nach einem der Ansprüche 1 bis 4,
dadurch gekennzeichnet,
daß während des Waschens der Waschwasserdruck allmählich bis 3,5 bar gesteigert wird.

6. Verfahren nach einem der Ansprüche 1 bis 5,
dadurch gekennzeichnet,
daß der Preßdruck nach dem Waschen auf einen Wert von maximal 30 bar, vorzugsweise einen Wert zwischen 10 und 20 bar eingestellt wird.

7. Verfahren nach einem der Ansprüche 1 bis 6,
dadurch gekennzeichnet,
daß der Gehalt an Schichtsilikat in der Ausgangssuspension auf 0,5 bis 3 %, vorzugsweise auf 1 bis 2 % eingestellt wird.

## Claims

1. A process for removing salts from swellable layer silicates using filter presses, characterized in that a membrane filter press is filled with an aqueous suspension containing layer silicates, the silicates are washed in the press and are only pressed thereafter.

2. A process as claimed in claim 1, characterized in that, for washing, the washing water is passed through the slurry channel (8) of the press and along between the halves of the filter cake.

3. A process as claimed in claim 1 or 2, characterized in that the suspension is introduced into the press under a feed pressure of at most 5 bar and preferably 1 to 3 bar.

4. A process as claimed in any of claims 1 to 3, characterized in that filling of the press with the layer silicates is completed before the halves of the filter cake coalesce.

5. A process as claimed in any of claims 1 to 4, characterized in that the washing water pressure is gradually increased to 3.5 bar during washing.

6. A process as claimed in any of claims 1 to 5, characterized in that, after washing, the pressure is adjusted to a value of at most 30 bar and preferably to a value of from 10 to 20 bar.

7. A process as claimed in any of claims 1 to 6, characterized in that the content of layer silicate in the starting suspension is adjusted to between 0.5 and 3% and preferably to between 1 and 2%.

## Revendications

1. Procédé pour dessaler des silicates stratifiés gonflants en utilisant des filtres-presses, caractérisé en ce que l'on remplit un filtre-presse à membrane avec une suspension aqueuse contenant les silicates stratifiés, qu'on lave ensuite les silicates dans la presse et qu'ensuite seulement, on les essore.

2. Procédé selon la revendication 1, caractérisé en ce que, pour le lavage, l'eau de lavage est amenée par le canal à liquide trouble (8) de la presse et acheminée entre les deux moitiés de gateau.

3. Procédé selon la revendication 1 ou 2, caractérisé en ce que la suspension est introduite dans la presse à une pression d'alimentation maximum de 5 bars, de préférence de 1 à 3 bars.

4. Procédé selon l'une des revendications 1 à 3, caractérisé en ce que le remplissage de la presse avec les silicates stratifiés est terminé avant que les moitiés de gateau se soudent ensemble.

5. Procédé selon l'une des revendications 1 à 4, caractérisé en ce que, durant le lavage, la pression de l'eau de lavage est progressivement augmentée jusqu'à 3,5 bars.

6. Procédé selon l'une des revendications 1 à 5, caractérisé en ce que la pression de pressage après le lavage est réglée à une valeur de maximum 30 bars, de préférence de l'ordre de 10 à 20 bars.

7. Procédé selon l'une des revendications 1 à 9, caractérisé en ce que la teneur en silicates stratifiés dans la suspension de départ est réglée à une valeur de 0,5 à 3%, de préférence de 1 à 2%.
